# EUROPÄISCHE PATENTANMELDUNG

(11) **EP 0 626 532 A1**
(43) Veröffentlichungstag der Anmeldung: **30.11.1994**
(21) Anmeldenummer: 94104114.7
(22) Anmeldetag: 16.03.1994
(51) Int. Cl.: F16L 3/01, H02G 11/00

(54) **Schleppkettenersatz**

(30) Priorität: 19.03.1993 DE 4308901
(71) Anmelder: W.L. GORE & ASSOCIATES GmbH, D-85636 Putzbrunn (DE)
(72) Erfinder: Karlström, Anders, D-91728 Gnotzheim (DE)
(74) Vertreter: Klunker . Schmitt-Nilson . Hirsch

(57) **Zusammenfassung**

Schleppkettenersatz für eine flexible Leitungsanordnung in Form eines Leitungsaufnahmekanals zur Verbindung zweier Einrichtungen, zwischen dene ein relative Bewegbarkeit besteht. Der Schleppkettenersatz umfaßt einen flexiblen Leitungsaufnahmekanal (31), der zwischen einem Bodenbereich (27) und einem Deckenbereich einen Kanalinnenraum (35) zur Aufnahme mindestens einer flexiblen Leitung (37,39), insbesondere in Form einer elektrischen Leitung oder eines elektrischen Kabels, aufweist. Der Leitungsaufnahmekanal (31) ist erfindungsgemäß mit einem flexiblen, permanent verformbaren, Flachmaterial aufgebaut. Der Deckenbereich des Leitungsaufnahmekanals (31) ist durch eine Vielzahl in Kanallängsrichtung aufeinanderfolgende, vom Bodenbereich (27) seitlich abstehende, permanent mit Abstand über den Bodenbereich (27) gebogene Laschen (15,17) aus dem Flachmaterial gebildet.

## Beschreibung

Die Erfindung betrifft einen Schleppkettenersatz für eine flexible Leitungsanordnung in Form eines Leitungsaufnahmekanals, zur Verbindung zweier Einrichtungen, zwischen denen eine relative Bewegbarkeit besteht, mit einem flexiblen Leitungsaufnahmekanal, der zwischen einem Bodenbereich und einem Deckenbereich einen Kanalinnenraum zur Aufnahme mindestens einer flexiblen Leitung, insbesondere in Form einer elektrischen Leitung oder eines elektrischen Kabels, aufweist.

Der Begriff flexible Leitung soll hier auch Schläuche, z.B. für Fluide, sowie Glasfasern oder Glasfaserkabel, Seile und Rohre umfassen.

Mit einem derartigen Schleppkettenersatz kann beispielsweise eine hin- und herbewegbare Einrichtung mit einer feststehenden Einrichtung verbunden werden.

Herkömmlicherweise verwendet man hierzu Schleppketten oder Schleppkettenanordnungen, die zwei oder mehrere Kettenbänder aus Metall oder Kunststoff aufweisen, in denen einzelne Leitungen geführt sind. Sind die feststehende Einrichtung und die hin- und herbewegliche Einrichtung übereinander angeordnet und überschreitet die Schleppkette im Hinblick auf den erforderlichen Bewegungsweg der beweglichen Einrichtung eine bestimmte Länge, legt sich das Obertrum der Schleppkette auf deren Untertrum ab. Dies führt entweder zu einer starken mechanischen Belastung der Schleppkette oder muß durch eine Zwischendecke in Form eines Gleitbleches in einem Führungskanal für die Schleppkette verhindert werden, wobei das obere Trum der Schleppkette auf dem Gleitblech abgelegt wird. Hinzu kommt, daß eine derartige Schleppkette aufgrund eines hohen Herstellungs- und Montageaufwandes teuer ist, erhebliche Bewegungsgeräusche verursachen kann und aufgrund des Spiels der Kettenglieder relativ zueinander eine Längsdehnung ermöglicht, die häufig unerwünscht ist. Eine derartige Schleppkette besitzt steife Kettenglieder aus gespritztem Kunststoff, der zur Formstabilität Glasfaserverstärkung aufweist. Es entstehen ein großer Platzbedarf und ein hohes Gewicht. Letzteres erfordert wiederum einen komplizierten Befestigungsmechanismus.

Aus der eigenen EP-Patentanmeldung 91 105 430.2 ist ein Schleppkettenersatz bekannt, bei dem die zuführende Leitung oder Leitungsanordnung mindestens auf derjenigen Seite, auf welcher die beiden Trums der Leitung oder Leitungsanordnung zueinander weisen, mit einer in Längsleitungsrichtung wirksamen Gleiteinrichtung versehen ist, welche eine Reibung zwischen den beiden Trums auch bei deren Aneinanderliegen verhindert. Eine der in dieser Patentanmeldung beschriebenen Möglichkeiten besteht darin, die Leitung oder Leitungsanordnung in einen als Gleiteinrichtung wirkenden Leitungsaufnahmekanal einzuführen. Aus der eigenen EP-Patentanmeldung 91 120 167.1 ist es bekannt, einen solchen Leitungsaufnahmekanal als im Prinzip geschlossenen Kanal auszubilden und eine Wand dieses Leitungsaufnahmekanals mit einem sich über dessen gesamte Länge erstreckenden Eindrückschlitz zu versehen, durch welchen die Leitung oder Leitungen, die von dem Leitungsaufnahmekanal aufgenommen werden sollen, von außen in den Leitungskanal hineingedrückt werden können.

Eine weitere Möglichkeit für einen derartigen Schleppkettenersatz, der ebenfalls aus der EP-Patentanmeldung 91 105 430.2 bekannt ist, besteht aus einer wandförmigen Gleiteinrichtung, auf welche die zu führende Leitung oder Leitungsanordnung aufgelegt wird und in deren Seitenränder eine Vielzahl von in Leitungslängsrichtung voneinander beabstandeten Winkelstiften eingesetzt ist. Parallel zu der Gleiteinrichtung verlaufende abgewinkelte Endbereiche der Winkelstücke übergreifen die auf die Gleiteinrichtung aufgelegte Leitung oder Leitungsanordnung.

Im Vergleich zu herkömmlichen Schleppketten sind die genannten Arten von Schleppkettenersatz relativ wenig aufwendig und kostengünstig. Es gibt aber einige Anwendungen, für welche ein Schleppkettenersatz mit noch geringerem Herstellungs- und Kostenaufwand erwünscht ist. Außerdem ist mitunter eine noch bessere und umfassendere Flexibilität erwünscht als sie die genannten Arten von Schleppkettenersatz bieten können.

Dieses Ziel wird mit einem Schleppkettenersatz der eingangs angegebenen Art erreicht, der erfindungsgemäß dadurch gekennzeichnet ist, daß der Leitungsaufnahmekanal mit einem flexiblen, permanent verformbare Flachmaterial aufgebaut ist und daß der Deckenbereich durch eine Vielzahl von in Kanallängsrichtung aufeinanderfolgenden, vom Bodenbereich seitlich abstehenden, permanent mit Abstand über den Bodenbereich gebogenen Laschen aus Flachmaterial gebildet ist.

Die Laschen sind vorzugsweise einstückig mit dem Bodenbereich ausgebildet. Die Laschen können alle auf einer Seite des Bodenbereichs angeordnet sein und über die gesamte Breite des Bodenbereichs hinübergebogen sein, vorzugsweise unter Einrollen dieser Laschen derart, daß ihre freien Enden auf dem gegenüberliegenden Seitenrand des Bodenbereichs aufliegen, damit ein geschlossener Kanal für die zu führende Leitung oder Leitungsanordnung gebildet ist.

Vorzugsweise ordnet man Laschen an beiden Seiten des Bodenbereichs an, die beide über den Bodenbereich gebogen sind. Dabei können die von entgegensetzten Seiten des Bodenbereichs abstehenden Laschen in Kanallängsrichtung gesehen miteinander ausgerichtet sein, wobei die freien Enden sich gegenüberstehender Laschen sich entweder nicht überlappen oder überlappen. Insbesondere im Fall des Nichtüberlappens kann man die Nahtstellen zwischen den freien Enden sich gegenüberstehender Laschen für in Kanallängsrichtung aufeinanderfolgende Laschenpaare abwechselnd gegenüber der Kanalmittellinie versetzen. Dies führt zu einer besseren Schließwirkung der Laschen.

Bei einer besonders bevorzugten Ausführungsform erstreckt sich jede der Laschen im wesentlichen über die Gesamtbreite des Bodenbereichs. Dabei ist das Abstandsraster der von einer Seite des Bodenbereichs abstehenden Laschen gegenüber dem Abstandsraster der von der anderen Seite des Bodenbereichs abstehenden Laschen in Kanallängsrichtung derart versetzt, daß sich im Deckenbereich von dei einen Seite des Bodenbereichs abstehende Laschen mit von der anderen Seite des Bodenbereichs abstehenden Laschen abwechseln. Bei dieser Ausführungsform sind die in Kanallängsrichtung aufeinanderfolgenden Laschen, die von der einen Seite des Bodenbereichs abstehen, mit den Laschen, die von der anderen Seite des Bodenbereichs abstehen, verzahnt. Dies führt zu einer besonders guten Schließwirkung der Laschen für den Leitungsaufnahmekanal.

Die Laschen können unterschiedliche Form haben. Bei einer bevorzugten Ausführungsform haben sie im wesentlichen Rechteckform. Im über den Bodenbereich gebogenen Zustand überlappen sich die von einer Seite abstehenden Laschen mit den von der anderen Seite abstehenden Laschen in Kanalquerrichtung gesehen teilweise und in Kanallängsrichtung gesehen vollständig. Es verbleiben somit über die gesamte Kanalquererstreckung verlaufende Spalten zwischen in Kanallängsrichtung benachbarten Laschen.

Bei einer anderen bevorzugen Ausführungsform sind die Laschen als sägezahnförmige Zähne, das heißt, als Zähne mit Dreiecksform, ausgebildet. Vorzugsweise sind dabei die Spitzen der Zähne, die von der einen Seite des Bodenbereichs abstehen, mit den Lücken zwischen den Zähnen, die von der anderen Seite des Bodenbereichs abstehen, ausgerichtet. Nach dem Hinüberbiegen dieser Zähne über den Bodenbereich ergibt sich dann ein auch im Deckenbereich besonders gut geschlossener Leitungsaufnahmekanal.

Insbesondere bei den beiden genannten Ausführungsformen kann man insbesondere an den beiden Längsenden des Leitungsaufnahmekanals zwischen den bodenbereichsseitigen Enden benachbarter Laschen Zwischenräume lassen, vorzugsweise mit halbkreisförmiger Ausbildung der bodenbereichsseitigen Enden der Zwischenräume. Diese können dazu verwendet werden, mindestens ein Längsende des Leitungsaufnahmekanals an der feststehenden bzw. der bewegbaren Einrichtung festzulegen. Hierfür geeignet ist eine Halterung, die an der feststehenden bzw. bewegbaren Einrichtung befestigt oder mit dieser integriert ist und eine offene oder geschlossene Kanalform mit einer Querschnittsform aufweist, deren Innenkontur an die Außenkontur des Leitungsaufnahmekanals angepaßt ist, so daß das betroffene Längsende des Leitungsaufnahmekanals in die Halterung einschiebbar ist. Vorzugsweise ist die Halterung wie ein Stück des Leitungsaufnahmekanals ausgebildet, einschließlich der Laschen. Vom Bodenbereich der Halterung stehen zu deren Deckenbereich gerichtete Rastvorsprünge hoch, die verrastend in die Zwischenräume zwischen in Kanallängsrichtung benachbarten Laschen des Leitungsaufnahmekanals eingreifen. Die Halterung besteht vorzugsweise aus Metall und die Vorsprünge sind vorzugsweise durch Herausdrücken aus dem seitlichen Bodenbereichsmaterial der Halterung gebildet.

Wenn die Leitungsanordnung zwischen feststehender und bewegbarer Einrichtung sowohl ein oder mehrere Flachbandkabel als auch einzelne Leitungen oder Kabel aufweist, besteht eine besonders kostengünstige und bevorzugte Ausführungsform darin, als Flachmaterial für den Leitungsaufnahmekanal das bzw. eines der Flachbandkabel zu verwenden und an einer Seite oder beiden Seiten des Bodenbereichs abstehende Laschen oder Zähne vorzusehen, die über den Bodenbereich bzw. eigentlichen Flachkabelbereich übergebogen werden und einen Leitungsaufnahmekanal für die einzelnen Leitungen oder Kabel bilden.

Als Flachmaterial eignet sich jedes Material, das einerseits flexibel ist, um den Bewegungen der bewegbaren Einrichtung folgen zu können, und das andererseits eine permanente Verformung der Laschen bzw. Zähne ermöglicht. Hierfür einsetzbare Materialien sind Kunststoffe, wobei eine Glasfaserverstärkung nicht erforderlich und oft auch nicht erwünscht ist, aber auch Metall Holz und Holzderivate, wie z.B. Papier und Pappe, in genügend dünner Ausführung. Als Materialien eignen sich solche, die einerseits flexibel sind und andererseits durch irgendeine Behandlung, z.B. thermischer oder chemischer Art, permanent verformt werden können, um die Laschen oder Zähne bleibend über den Bodenbereich zu biegen. Bevorzugte Materialien hierfür sind thermoverformbare Kunststoffe, beispielsweise Polypropylen (PP) und Polycarbonat, die durch Erwärmen permanent verformt werden können, wobei die unter Erwärmung vorgenommene Verformung nach dem Abkühlen erhalten bleibt. Geeignet sind aber auch Kunststoffe, die durch vorübergehende Einwirkung von Weichmachern, Lichtenergie, beispielsweise im UV-Bereich, oder durch Hochfrequenzenergie kurzzeitig plastisch verformt werden können und diese Verformung danach permanent beibehalten.

Ein großer Vorteil des erfindungsgemäßen Schleppkettenersatzes ist darin zu sehen, daß er leicht elastisch verbiegbar ist, so daß nur ein geringer Anteil der Antriebskraft zum Bewegen der bewegbaren Einrichtung für das flexible Verbiegen des Schleppkettenersatzes benötigt wird. Besonders vorteilhaft ist auch, daß sich der erfindungsgemäße Schleppkettenersatz leicht in verschiedene Richtungen biegen läßt.

Der erfindungsgemäße Schleppkettenersatz eignet sich auch für die Verbindung zweier Einrichtungen, die je beweglich sind und dabei eine Relativbewegung zueinander durchführen. In diesem Fall kann ein Mittenbereich des Leitungsaufnahmekanals gefaltet und die Faltstelle fixiert werden.

Der erfindungsgemäße Schleppkettenersatz ist auch geeignet für sogenannten 3D-Einsatz, also einen dreidimensionalen Einsatz, bei welchem die bewegbare Einrichtung eine Bewegung nicht nur in einer einzigen Ebene führt, sondern eine dreidimensionale Bewegung. Die dreidimensionale Bewegbarkeit des erfindungsgemäßen Schleppkettenersatzes kann man durch entsprechende Formgebung der Laschen bzw. Zähne sicherstellen.

Bei derartigen dreidimensionalen Bewegungen der bewegbaren Einrichtung läßt man die Verbindungsleitungen bisher häufig frei hängen, um eine solche Bewegung zu ermöglichen. Führt man solche Leitungen mit einem erfindungsgemäßen Schleppkettenersatz, können sie sich nicht verheddern wie im Fall des Freihängens. Außerdem kann über den Schleppkettenersatz eine Zugentlastung für die Leitung oder Leitungen bewirkt werden. Zu diesem Zweck werden die beiden Enden des Schleppkettenersatzes an der feststehenden Einrichtung bzw. der bewegbaren Einrichtung festgelegt, beispielsweise durch Festschrauben. Zugbeanspruchungen werden dann von dem Schleppkettenersatz aufgenommen und von der Leitung oder den Leitungen ferngehalten.

Die vorliegende Erfindung macht außerdem ein Verfahren zur Herstellung eines erfindungsgemäßen Schleppkettenersatzes verfügbar. Bei diesem Verfahren wird aus einer Bahn aus flexiblem, durch Wärmeeinwirkung permanent verformbarem, folienartigem Flachmaterial ein Band mit einem Basisbereich entsprechend der Breite des Bodenbereichs und mit seitlich davon abstehenden Laschen ausgestanzt. Das ausgestanzte Band wird mindestens im Bereich des Übergangs von Basisbereich und Laschen bis zur plastischen (permanenten) Verformbarkeit erwärmt. In diesem Erwärmungszustand werden die Laschen über den den Bodenbereich bildenden Basisbereich gebogen und derart gebogen gehalten, bis es zu einer Abkühlung unter die die plastische Verformung ermöglichende Temperatur gekommen ist.

Um die mit dem so erhaltenen Schleppkettenersatz zu führende Leitung oder Leitungsanordnung nicht nachträglich in Längsrichtung durch den Leitungsaufnahmekanal fädeln zu müssen, wird bei einer besoders bevorzugten Ausführungsform des erfindungsgemäßen Verfahrens das permanente Umbiegen der Laschen oder Zähne über dem Bodenbereich erst nach dem Auflegen der Leitung oder Leitungsanordnung auf den Bodenbereich vorgenommen.

Man kann den Schleppkettenersatz in quasi endloser Form herstellen, indem man das folienartige Flachmaterial und die darin zu führende Leitung oder Leitungen je von einer Vorratsrolle abspult, zunächst die Laschen oder Zähne stanzt, danach die Leitung oder Leitungen mit dem gestanzten Flachmaterial zusammenführt und schließlich die Laschen oder Zähne über dem Bodenbereich und die Leitung bzw. Leitungen permanent hinüberbiegt. Danach können der aus dem Flachmaterial gebildete Leitungskanal und die darin eingelegte Leitung oder Leitungen auf die jeweils gewünschte Länge abgeschnitten werden. Für den Fall, daß die Leitungsenden über die Enden des Leitungsaufnahmekanals hinausragen sollen, braucht man die Enden des Leitungsaufnahmekanals nur entsprechend zurückzuschneiden.

Eine besonders bevorzugte Einsatzart für den erfindungsgemäßen Schleppkettenersatz sind Geräte mit bewegbarer Einrichtung, für die eine Leitungsanordnung mit relativ geringem Gewicht und nicht allzu großer Länge ausreicht. Ein Beispiel hierfür sind Geldautomaten, bei denen ein Kartenleseteil, ein Geldausgabeteil und ein Druckerteil Relativbewegungen ausführen, Fahrkarten- und Flugticket-Automaten und Drucker.

Die Erfindung wird nun anhand von Ausführungsformen näher erläutert. In den Zeichnungen zeigen:
- **Fig. 1**: eine erste Ausführungsform eines Leitungsaufnahmekanals für einen erfindungsgemäßen Schleppkettenersatz in verschiedenen Herstellungsphasen;
- **Fig. 2**: einen erfindungsgemäßen Schleppkettenersatz nach Art der ersten Ausführungsform mit einer elektrischen Leitungsanordnung;
- **Fig. 3**: eine zweite Ausführungsform eines Leitungsaufnahmekanals für einen erfindungsgemäßen Schleppkettenersatz;
- **Fig. 4**: den Leitungsaufnahmekanal der **Fig. 3** in einer Vorfertigungsphase;
- **Fig. 5** bis **7**: den Leitungsaufnahmekanal der **Fig. 3** in Stirnseiten- bzw. Längsseitenansicht bzw. in Draufsicht;
- **Fig. 8**: den Leitungsaufnahmekanal nach **Fig. 3** mit einer Ausführungsform einer erfindungsgemäßen Halterung; und
- **Fig. 9** und **10**: die Halterung gemäß **Fig. 8** in Draufsicht bzw. Stirnseitenansicht.

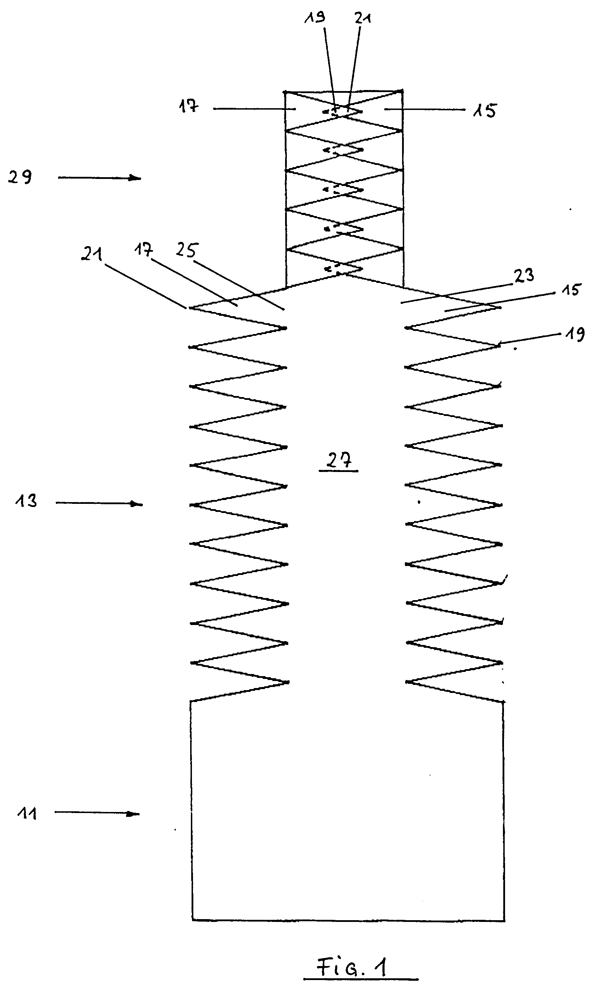

Anhand von **Fig. 1** wird nun das Verfahren zur Herstellung eines erfindungsgemäßen Leitungsaufnahmekanals erläutert.

In einem in **Fig. 1** unteren Bereich 11 befindet sich folienartiges Flachmaterial in Bandform. In einem in **Fig. 1** mittleren Bereich 13 sind beide Ränder des Flachmaterials zahnförmig gestanzt. Dadurch ist an beiden Seiten des Flachmaterials je eine in Längsrichtung des Flachmaterials verlaufende Reihe von Zähnen 15 auf der in **Fig. 1** rechten Seite und Zähnen 17 auf der in **Fig. 1** linken Seite gebildet. Die Zähne 15 und 17 haben Dreiecksform. Zahnspitzen 19 der rechten Zähne 15 und Zahnspitzen 21 der linken Zähne 17 fluchten je mit einem Seitenrand des Flachmaterials vor dem Stanzvorgang. Bei der dargestellten Ausführungsform liegen die Zahnspitzen 19 und 21 sich gegenüberliegender Zahnpaare 15 und 17 je auf einer gemeinsamen, rechtwinkelig zur Längsachse des Flachmaterials verlaufenden Linie. Rechte Fußbereiche 23 der rechten Zähne 15 und linke Fußbereiche 25 der linken Zähne 17 bilden die beiden seitlichen Begrenzungen eines vom Stanzvorgang nicht erfaßten Basisbereichs 27.

In einem in **Fig. 1** oberen Bereich 29 ist das Ergebnis der nächsten Herstellungsphase gezeigt, in welcher die Zähne 15 und 17 permanent übereinandergebogen werden. Zu diesem Zweck werden mindestens die Fußbereiche 23 und 25 so weit erwärmt, daß sie sich so weit plastisch verformen lassen, bis die Zähne 15 und 17 über den Basisbereich 27 biegbar sind. Die umgebogenen Zähne 15 und 17 werden so lange in dem umgebogenen Zustand festgehalten, bis eine Abkühlung unter diejenige Temperatur stattgefunden hat, ab welcher eine solche plastische Verformung möglich ist. Nach diesem Abkühlvorgang behalten die Zähne 15 und 17 ihren umgebogenen Zustand permanent bei.

Bei der in **Fig. 1** dargestellten Ausführungsform überlappen sich die Zahnspitzen 19 und 21 über einem Teil der Quererstreckung des Basisbereichs 27. Bei der dargestellten Ausführungsform beträgt der Überlappungsbereich etwa 30 % der Quererstreckung des Basisbereichs 27. Durch Verändern der Quererstreckungslänge der Zähne 15 und/oder 17 kann man einen geringeren oder einen höheren Überlappungsbereich erzielen. Je geringer der Überlappungsbereich ist, um so leichter lassen sich elektrische Leitungen und/oder Kabel nach dem Stanzen und Formen des Flachmaterials in den damit gebildeten Leitungsaufnahmekanal einbringen. Wird aber als vorrangig ein möglichst sicheres Festhalten der Leitungen und/oder Kabel in dem Leitungsaufnahmekanal angesehen, macht man den Überlappungsbereich vorteilhafterweise breiter.

Man kann auch (in nicht dargestellter Weise) die Quererstreckungslängen der Zähne 15 und 17 unterschiedlich machen, was dazu führt, daß die Mitte des Überlappungsbereichs nicht mehr mit der Längsmittellinie des Basisbereichs 27 zusammenfällt, sondern gegenüber diese Längsmittellinie seitlich versetzt ist. Es besteht die weitere Möglichkeit, von in Längsrichtung des Flachmaterials aufeinanderfolgenden Paaren sich gegenüberliegender Zähne 15 und 17 abwechselnd den rechten Zahn 15 und den linken Zahn 17 länger als den jeweils anderen Zahn dieses Paares zu machen. Auf diese Weise erhält man einen Zickzackverlauf des Überlappungsbereichs zwischen den einzelnen Zahnpaaren 15 und 17. Dies kann zu einer besonders guten Schließwirkung des Leitungsaufnahmekanals führen, macht aber das Einlegen von Leitungen und/oder Kabeln in den Leitungsaufnahmekanal nach dessen Herstellungsvorgang schwerer.

Eine weitere Möglichkeit besteht darin, daß die Zahnspitzen 19 und 21 der Zähne 15 und 17 sich gegenüberliegender Zahnpaare nicht auf einer gemeinsamen, rechtwinkelig zur Längserstreckungsrichtung des Flachmaterials verlaufenden Linie liegen, sondern in Längserstreckungsrichtung des Flachmaterials gegeneinander versetzt sind. Das gleiche gilt dann für die Fußbereiche derartig gestanzter Zähne. Derartig gestanzte Zähne führen nach dem Umbiegen der Zähne 15 und 17 über den Basisbereich 27 zu einem vollständigeren Schließen des Leitungsaufnahmekanals als bei der im oberen Bereich 29 in **Fig. 1** dargestellten Ausführungsform. Dabei werden die Zahnspitzen 15,19 der rechten Zahnreihe (15) zwischen die Zahnlücken der anderen Zahnreihe (17) gebogen.

Die Form der Zähne 15, 17 und die Positionierung der Zahnspitzen 19, 21 der beiden Zahnreihen können nach den Bedürfnissen für die flexible Beweglichkeit des Schleppkettenersatzes in Abhängigkeit von der Bewegungsbahn der bewegbaren Einrichtung gewählt werden. Führt die bewegbare Einrichtung lediglich eine Hin- und Herbewegung, also eine zweidimensionale Bewegung, durch, kann man die Zähne der einen Zahnreihe zwischen die Zahnlücken der anderen Zahnreihe biegen, wobei sich die Zahnspitzen der von verschiedenen Seiten umgebogenen Zähne nach dem Umbiegen in einer gemeinsamen Ebene befinden können. Mit einem derart geformten Leitungsaufnahmekanal kann eine gewisse Stabilisierung gegenüber nicht erforderlichen oder sogar nicht erwünschten Biegungsbewegungen anderer als zweidimensionaler Art erreicht werden.

Benötigt man jedoch einen Schleppkettenersatz mit dreidimensionaler Bewegbarkeit, empfiehlt es sich, die Zahnspitzen 19,21 der Zähne 15, 17 entgegengesetzter Zahnreihen auf unterschiedlichen Abstand von dem Basisbereich 27 zu biegen und möglicherweise zusätzlich die Zähne gemäß der in **Fig. 1** gezeigten Ausführungsform anzuordnen, so daß in Querrichtung gesehen sowohl die Zahnspitzen 19,21 als auch die Zahnlücke miteinander fluchten. Diese Struktur erlaubt dreidimensionales flexibles Verbiegen des Leitungsaufnahmekanals, beispielsweise in wendelförmiger Art.

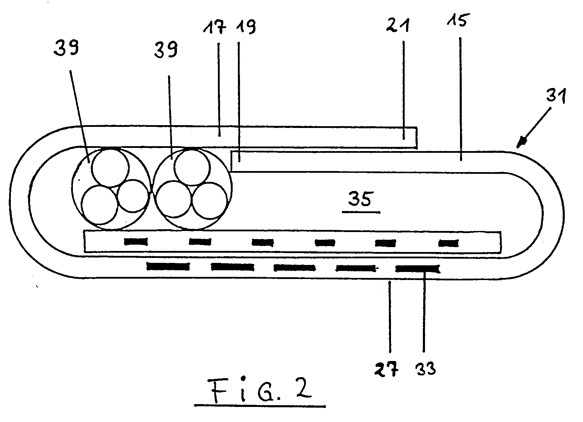

**Fig. 2** zeigt eine Querschnittsansicht eines Leitungsaufnahmekanals 31, der durch einen Herstellungsvorgang gemäß **Fig. 1** entstanden ist. Bei dieser Ausführungsform ist der Basisbereich 27, der den Bodenbereich des Leitungsaufnahmekanals bildet, durch ein Flachbandkabel mit Flachbandleitern 33 gebildet. Durch Umbiegen der seitlich vom Flachbandkabel abstehenden Zähne 15 und 17 unter Einhaltung eines Abstandes vom Basisbereich 27 und unter Überlappung der Zähne 19 und 21 ist ein geschlossener Kanalinnenraum 35 gebildet. Bei der in **Fig. 2** dargestellten Ausführungsform befinden sich im Kanalinnenraum 35 ein loses (weiteres) Flachbandkabel 37 und zwei Rundkabel 39.

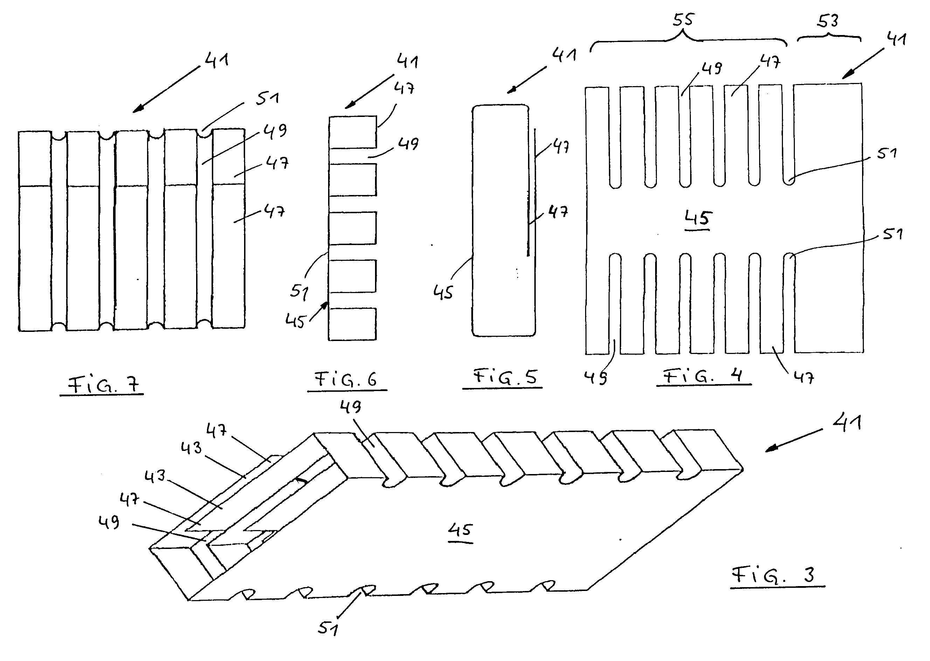

**Fig. 3** zeigt eine zweite Ausführungsform eines erfindungsgemäßen Leitungsaufnahmekanals 41. Dieser weist im Gegensatz zu der in **Fig. 1** dargestellten Ausführungsform Rechtecklaschen 43 auf Deren über einen Bodenbereich gebogene freie Enden 47 überlappen sich in Kanalquerrichtung teilweise, wobei sich in Kanalquerrichtung gegenüberliegende Rechtecklaschen 47 in Kanallängsrichtung vollständig überlappen. Zwischen in Kanallängsrichtung benachbarten Rechtecklaschen 43 sind Zwischenräume 49 gebildet, deren bodenbereichsseitige Enden 51 halbkreisförmig ausgebildet sind und in die Seitenränder des Bodenbereichs 45 hineinreichen. Insgesamt weist der Leitungsaufnahmekanal gemäß **Fig. 3** einen Rechteckquerschnitt auf.

**Fig. 4** zeigt einen Leitungsaufnahmekanal gemäß **Fig. 3** in einer Vorfertigungsphase. In einem in **Fig. 4** oberen Bereich 53 ist eine Bahn aus folienartigem Flachmaterial gezeigt, das noch nicht mit Laschen versehen ist. Ein daran anschließender, in **Fig. 4** unterer Bereich 55 zeigt das bahnförmige Flachmaterial nach dem Ausstanzen von Rechtecklaschen 47 mit den dazwischen befindlichen Zwischenräumen 49 mit halbkreisförmigen bodenbereichsseitigen Enden 51. Auf verschiedenen Längsseiten des Bodenbereichs 45 befindliche Rechtecklaschen 43 liegen sich paarweise exakt gegenüber.

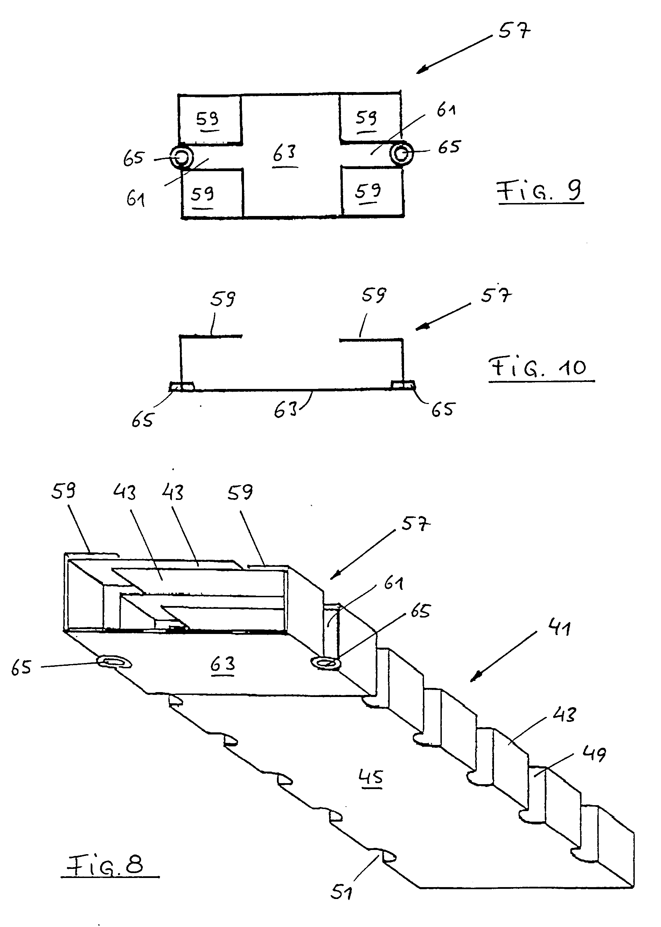

**Fig. 5** zeigt in Stirnseitenansicht einen durch Hochbiegen der Rechtecklaschen 47 fertiggestellten Leitungsaufnahmekanal gemäß **Fig. 3**. Dabei ist zu sehen, daß sich die freien Enden paarweise gegenüberliegender Rechtecklaschen 47 über einen beträchtlichen Bereich der Kanalquererstreckung überlappen.

Die in **Fig. 6** gezeigte Längsseitenansicht des Leitungsaufnahmekanals 45 zeigt, daß sich die Zwischenräume 49 über beide Längsseiten und den Deckenbereich des Leitungsaufnahmekanals 41 erstrecken, oder, mit anderen Worten, daß die Zwischenräume 49 zwischen benachbarten Rechtecklaschen 47 an einer Längsseite des Bodenbereichs 45 mit den Zwischenräumen 49 zwischen benachbarten Rechtecklaschen 47 an der anderen Längsseite des Bodenbereichs 45 miteinander fluchten. Dies führt zu einer guten Biegbarkeit des Leitungsaufnahmekanals unter Aufeinander-Zubewegen der Deckenbereiche in Kanallängsrichtung benachbarter Rechtecklaschen.

Die in **Fig. 7** gezeigte Draufsicht auf den Leitungsaufnahmekanal 45 zeigt das Überlappen der freien Enden der Rechtecklaschen 47, die dazwischen befindlichen Spalten 49 und die in die Seitenränder des Bodenbereichs 45 hineinreichenden, halbkreisförmigen, bodenbereichsseitigen Enden 51 der Zwischenräume 49.

In den **Figuren 8** bis **10** ist eine Ausführungsform einer erfindungsgemäßen Halterung 57 für den Leitungsaufnahmekanal 41 gezeigt. Die Halterung 57 ist im wesentlichen wie ein Stück des Leitungsaufnahmekanals 41 ausgebildet mit folgenden Ausnahmen: Die Innenabmessungen des Querschnitts der Halterung 57 sind um so viel größer als die Außenabmessungen des Querschnitts des Leitungsaufnahmekanals 41, daß der Leitungsaufnahmekanal 41 in die Halterung 57 eingeschoben werden kann. Die freien Enden von Halterungslaschen 59 überlappen sich nicht. Bodenbereichsseitige Enden von Halterungszwischenräumen sind durch Hochdrücken von Material eines Halterungsbodenbereichs 63 in zum Halterungsdeckenbereich gerichtete kreisförmige Rastvorsprünge 65 geformt. Diese rasten in die halbkreisförmigen bodenbereichsseitigen Enden 51 des Leitungsaufnahmekanals 41 ein, wenn dessen Ende in die Halterung 57 eingeschoben wird.

Die Form und Position sowohl der Halterungslaschen 59 als auch der Halterungszwischenräume 61 sowie der Rastvorsprünge 65 sind auf der Draufsicht in **Fig. 9** und der Stirnseitenansicht in **Fig. 10** der Halterung 57 zu sehen.

Die Halterung ist an der feststehenden Einrichtung bzw. der bewegbaren Einrichtung befestigt oder mit dieser integriert. Sie besteht vorzugsweise aus Metallblech, kann aber auch aus Kunststoff hergestellt sein. Beispielsweise kann die Halterung aus dem gleichen Material wie der Leitungsaufnahmekanal bestehen.

Dadurch, daß der erfindungsgemäße Schleppkettenersatz mit dem Leitungsaufnahmekanal 41 lediglich in die Halterung 57 eingeschoben zu werden braucht und darin verrastet, spart man Schrauben und die Zeit zu deren Festschrauben. Man kommt daher ohne Werkzeug und mit weniger Teilen aus und kann die Montage schneller und billiger durchführen.

## Patentansprüche

1. Schleppkettenersatz für eine flexible Leitungsanordnung in Form einse Leitungsaufnahmekanals zur Verbindung zweier Einrichtungen, zwischen dene ein relative Bewegbarkeit besteht, in Form eines flexiblen Leitungsaufnahmekanals (31), der zwischen einem Bodenbereich (27) und einem Deckenbereich, einen Kanalinnenraum (35) zur Aufnahme mindestens einer flexiblen Leitung (37,39), insbesondere in Form einer elektrischen Leitung oder eines elektrischen Kabels, aufweist,
**dadurch gekennzeichnet,**
daß der Leitungsaufnahmekanal (31) mit einem flexiblen, permanent verformbaren, folienartigen Flachmaterial aufgebaut ist und
daß der Deckenbereich durch eine Vielzahl in Kanallängsrichtung aufeinanderfolgende, vom Bodenbereich (27) seitlich abstehende, permanent mit Abstand über den Bodenbereich (27) gebogene Laschen (15,17) aus dem Flachmaterial gebildet ist.

2. Schleppkettenersatz nach Anspruch 1,
**dadurch gekennzeichnet,**
daß die Laschen (15,17) einstückig mit dem Bodenbereich (27) ausgebildet sind.

3. Schleppkettenersatz nach Anspruch 1 oder 2,
**dadurch gekennzeichnet,**
daß von beiden Seiten des Bodenbereichs (27) Laschen (15,17) über den Bodenbereich (27) gebogen sind.

4. Schleppkettenersatz nach Anspruch 3,
**dadurch gekennzeichnet,**
daß sich jede der Laschen (15,17) im wesentlichen über die Gesamtbreite des Bodenbereichs (27) erstreckt und
daß das Abstandsraster der von einer Seite des Bodenbereichs (27) abstehenden Laschen (15,17) gegenüber dem Abstandsraster der von der anderen Seite des Bodenbereichs (27) abstehenden Laschen (15,17) in Kanallängsrichtung derart versetzt ist, daß sich im Deckenbereich von der einen Seite des Bodenbereichs (27) abstehende Laschen (15,17) mit von der anderen Seite des Bodenbereichs (27) abstehende Laschen (15,17) abwechseln.

5. Schleppkettenersatz nach mindestens einem der Ansprüche 1 bis 4,
**dadurch gekennzeichnet,**
daß die Laschen als sägezahnförmige Zähne (15,17) ausgebildet sind.

6. Schleppkettenersatz nach mindestens einem der Ansprüche 1 bis 4,
**dadurch gekennzeichnet,**
daß die Laschen als Rechtecklaschen (43) ausgebildet sind.

7. Schleppkettenersatz nach mindestens einem der Ansprüche 1 bis 6,
**dadurch gekennzeichnet,**
daß zwischen benachbarten Laschen (15,17;43) Zwischenräume (49) gebildet sind, deren bodenbereichsseitige Enden (51) bis in die Seitenränder des Bodenbereichs (27;45) hineinreichen.

8. Schleppkettenersatz nach Anspruch 7,
**dadurch gekennzeichnet,**
daß die bodenbereichsseitigen Enden (51) der Zwischenräume (49) im wesentlichen halbkreisförmig ausgebildet sind.

9. Schleppkettenersatz nach mindestens einem der Ansprüche 1 bis 8,
**dadurch gekennzeichnet,**
daß das Flachmaterial thermisch oder chemisch permanent verformbar ist.

10. Schleppkettenersatz nach Anspruch 9,
**dadurch gekennzeichnet,**
daß das Flachmaterial aus der Materialgruppe Kunststoff, insbesondere Polypropylen und Polycarbonat Holz und Holzderivate, insbesondere Papier und Pappe, und Metall ausgewählt ist.

11. Schleppkettenersatz nach mindestens einem der Ansprüche 1 bis 10,
**dadurch gekennzeichnet,**
daß das Flachmaterial durch ein elektrisches Flachkabel mit seitlich abstehenden Laschen (15,17) gebildet ist, dessen Flachkabelbereich den Bodenbereich (27) des Leitungsaufnahmekanals (31) bildet.

12. Verfahren zur Herstellung eines Schleppkettenersatzes nach einem der Ansprüche 1 bis 11,
**dadurch gekennzeichnet,**
daß aus einer Bahn aus flexiblem, durch Wärmeeinwirkung permanent verformbarem, folienartigem Flachmaterial ein Band mit einem Basisbereich (27) entsprechend der Breite des Bodenbereichs und mit seitlich davon abstehenden Laschen (15,17) ausgestanzt wird,
daß das ausgestanzte Band mindestens im Bereich des Übergangs von Basisbereich (27) und Laschen (15,17) bis zur plastischen Verformbarkeit erwärmt wird, und
daß die Laschen (15,17) in diesem Erwärmungszustand über den den Bodenbereich bildenden Basisbereich (27) gebogen und bis zur Abkühlung unter die die plastische Verformung ermöglichende Temperatur gebogen gehalten werden.

13. Verfahren nach Anspruch 12,
**dadurch gekennzeichnet,**
daß die Leitung oder Leitungen (37,39) vor dem plastischen Verformen der Lasehen (15,17) auf den Basisbereich (27) aufgelegt werden und die Laschen (15,17) danach über die Leitungen (37,39) hinweg gebogen werden.

14. Halterung für einen Schleppkettenersatz nach mindestens einem der Ansprüche 7 bis 11,
**dadurch gekennzeichnet,**
daß die Halterung (57) einen Querschnitt aufweist, der für das im wesentlichen formschlüssige Einschieben eines Längsendes des Leitungsaufnahmekanals(41) bemessen ist,
daß die Halterung (57) an den Längsseitenrändern eines Halterungsbodenbereichs (63) Rastvorsprünge in Richtung zu einem Halterungsdeckenbereich hochstehende Rastvorsprünge (65) aufweist, die bei in die Halterung (57) eingeschobenem Leitungsaufnahmekanal (41) in die bodenbereichsseitigen Enden (51) der Zwischenräume (49) zwischen benachbarten Laschen (43) verrastend eingreifen.

15. Halterung nach Anspruch 14,
**dadurch gekennzeichnet,**
daß die Halterung (57) an der feststehenden oder der bewegbaren Einrichtung befestigt oder mit dieser integriert ist.
